Europäisches Patentamt

European Patent Office

Office européen des brevets

(11) Veröffentlichungsnummer: **0 067 978**

A2

(12) EUROPÄISCHE PATENTANMELDUNG

(21) Anmeldenummer: 82104672.9

(22) Anmeldetag: 27.05.82

(51) Int. Cl.³: **H 02 J 3/36**
**H 02 J 3/18**

(30) Priorität: 10.06.81 DE 3122998

(43) Veröffentlichungstag der Anmeldung:
29.12.82 Patentblatt 82/52

(84) Benannte Vertragsstaaten:
AT FR GB SE

(71) Anmelder: SIEMENS AKTIENGESELLSCHAFT Berlin
und München
Postfach 22 02 61
D-8000 München 22(DE)

(72) Erfinder: Kaufhold, Wolfgang, Dipl.-Ing.
Lannersberg 15
D-8520 Erlangen-Tennenlohe(DE)

(54) **Verfahren und Anordnung zur Regelung der Netzblindleistung bei einer Hochspannungs-Gleichstrom-Übertragung.**

(57) Die Differenz aus Soll- und Istwert des Gleichstromes Jd wird als Stromregelgröße einem Stromregler (PJ1) zugeführt, der das Übersetzungsverhältnis ($\ddot{u}_T$) des Stationstransformators so beeinflußt, daß seine Ausgangsgröße in bestimmten Grenzen gehalten wird und bei Erreichen eines der beiden Endwerte ($\ddot{u}_{Tmax}$, $\ddot{u}_{Tmin}$) des Übersetzungsverhältnisses der Stromrichtertransformatoren Kompensationsmittel (C1, C2) in Bereitschaft gebracht werden, die dann bei Erreichen bestimmter Grenzen der von der Ausgangsgröße des Stromreglers (PJ1) und der Netzblindleistung (Q) abhängigen Steuerwinkel ($\alpha$, $\gamma$) unter unmittelbar vorheriger Ansteuerung der jeweils entgegengesetzten Steuerwinkelgrenzwerte ($\alpha_{min}$, $\gamma_{min}$; $\alpha_{max}$, $\gamma_{max}$) geschaltet werden.

Die Stromregelgröße wird in regelmäßigen Abständen auf Gleichstromänderungen abgefragt und diese Gleichstromänderungen einem Stromfunktionsgeber (FGJ) mit beizunehmenden Gleichstromänderungen zunehmender Netzblindleistung zugeführt. Dessen Ausgangsgröße wird mit dem jeweiligen Steuerwinkel ($\alpha$) bzw. ($\gamma$) multipliziert und das Produkt zur Leistungsregelgröße aus der Differenz von Soll- und Istwert der Netzblindleistung (Q) addiert und die Summe beider Größen einem Winkelfunktionsgeber (FG$\alpha(\gamma)$) mit bei abnehmenden Steuerwinkel ($\alpha$; $\gamma$) zunehmender Netzblindleistung zugeführt. Dessen Ausgangsgröße (Steuerwinkeländerung $\Delta\alpha$, $\Delta\gamma$) wird mit dem Gleichstromistwert ($J_{dx}$) multipliziert und das Produkt zur besagten Stromregelgröße addiert zwecks Bildung der Steuerwinkel ($\alpha$, $\gamma$) für die Gleich-

bzw. Wechselrichterstationen (GR, WR), wobei bei Erreichen des Maximalwertes des betreffenden Steuerwinkels ($\alpha_{max}$; $\gamma_{max}$) eine entsprechend negative Korrekturgröße, bzw. bei Erreichen des Minimalwertes des betreffenden Steuerwinkels ($\alpha_{min}$; $\gamma_{min}$) eine entsprechende positive Korrekturgröße zugeführt wird, die die besagten Kompensationsmittel (C1, C2) zu- bzw. abschalten.

./...

Croydon Printing Company Ltd.

EP 0 067 978 A2

FIG 1

SIEMENS AKTIENGESELLSCHAFT        Unser Zeichen

Berlin und München                VPA 81 P 3 0 9 8 E

Verfahren und Anordnung zur Regelung der Netzblindleistung bei einer Hochspannungs-Gleichstrom-Übertragung


Die Erfindung betrifft eine Anordnung zur Regelung der
Netzblindleistung bei einer Hochspannungs-Gleichstrom-
Übertragung (HGÜ) nach dem Oberbegriff des Patentanspruches 1.


Bei den bekannten Regelanordnungen wird auf der Wechselrichterstation als Steuerwinkel der Löschwinkel auf einen
gewünschten Wert $\gamma$= 12 bis 18° über einen größeren Betriebsbereich geregelt. Dadurch wird die HGÜ mit minimaler Netzblindleistung auf der Wechselrichterstation gefahren, was dazu führt, daß die minimale Netzblindleistung auch auf der Gleichrichterstation vorliegt. Es
kann daher die Einhaltung eines Toleranzbandes für die
Netzblindleistung dadurch erreicht werden, daß mittels
Kompensationskondensatoren, Filtern o.a. Kompensationsmitteln eine Kompensationsblindleistung entsprechend
der Höhe des Gleichstromes zu- oder abgeschaltet wird.
Als Einflußgröße für die Regelung des Gleichstromes wird
dabei, wie gesagt, der Löschwinkel herangezogen.


Für bestimmte Netzbedingungen, z.B. bei Netzen mit geringer Kurzschlußleistung oder bei nicht ausreichender
Blindleistung wird eine Einengung des Toleranzbandes
der Netzblindleistung langzeitig erforderlich. Dabei
wird nur jeweils innerhalb einer die transiente Lastzeitkonstante am Netz liegender elektrischer Maschinen
nicht überschreitenden kurzen Zeit eine in diesen Zeitspannen größere Bezugsmöglichkeit erhöhter Netzblindleistung ausgenutzt.


Ot 2 Ts / 18.05.1981

Der Erfindung liegt die Aufgabe zugrunde, eine bei beliebigen Netzbedingungen in gleicher Weise vorteilhafte schnellere Regelung der Netzblindleistung mit einfacheren Mitteln sicher durchführen zu können und eine hierzu vorteilhafte Anordnung zu schaffen.

Die Lösung der Aufgabe ein solches Regelverfahren zu schaffen, gelingt durch die kennzeichnenden Merkmale des Patentanspruches 1.

Bei dieser Gradientenregelung der Netzblindleistung nach der Erfindung werden die Steuerwinkel (Löschwinkel $\gamma$ der Wechselrichterstation bzw. Zündwinkel $\alpha$ der Gleichrichterstation) zwischen minimalen und maximalen Grenzwerten als veränderliche Größen so geregelt, daß innerhalb des Regelbereiches der Differentialquotient aus der Netzblindleistung und dem Gleichstrom gegen Null geht, so daß die Netzblindleistung konstant gehalten und zu Null gemacht werden kann. Bei Erreichen der jeweiligen maximalen bzw. minimalen Grenzwerte der Steuerwinkel werden die Kompensationsmittel zu- bzw. abgeschaltet, wobei in den Wechselrichter- und Gleichrichterstationen unmittelbar vor diesem Schaltvorgang jeweils der entgegengesetzte Grenzwert des betreffenden Steuerwinkels angesteuert wird, wodurch kurzzeitig für die Dauer des Steuervorganges eine erhöhte Netzblindleistung auftritt.

In der Wechselrichterstation wird beim Zuschalten von Kompensationsmitteln der Löschwinkel vom minimalen auf den maximalen Grenzwert verstellt, um die durch das zugeschaltete Kompensationsmittel auftretende plötzliche Zunahme der Netzblindleistung auszugleichen. Durch die Steuerwinkelvergrößerung wird zusätzlich die sonst beim Zuschalten des Kompensationsmittels bei kleinen Löschwinkeln geringe Kippsicherheit der Wechselrichter erhöht.

Als Einflußgröße für die Regelung des Gleichstromes wird bei der Erfindung also die Netzblindleistung herangezogen. Für Gleich- und Wechselrichter sind dabei im Nennpunkt die bisherigen minimalen Garantiewerte für die Steuerwinkel wirksam, wenn die zu schaltenden Kompensationsmittel entsprechend bemessen sind.

Vorteilhafterweise können die Sollwerte für die Netzblindleistung für Gleich- und Wechselrichter getrennt eingegeben werden. Außerdem kann das Übersetzungsverhältnis der Stromrichtertransformatoren in den Gleich- und Wechselrichterstationen durch Speichern der Ausgangswerte der Stromregler zum Ausgleich der Tagesänderung der Netzspannung herangezogen werden.

Eine Anordnung zur Durchführung des Verfahrens nach Patentanspruch 1 ist Gegenstand des Patentanspruches 5 gemäß dessen kennzeichnenden Merkmalen.

Der Freiheitsgrad für die Gleichstromregelung wird dadurch erreicht, daß durch das getrennt erfaßte Überschreiten der Ausgangsgröße des Stromreglers das Übersetzungsverhältnis des Stromrichtertransformators (über ein Transformator-Stufenschaltwerk) so geändert wird, daß die Ausgangsspannung des Stromreglers innerhalb bestimmter Grenzen bleibt. Bei Erreichen der Endstellung des Transformator-Stufenschaltwerkes werden über eine Impulslogik Kompensationsmittel in Bereitstellung gebracht, so daß bei Erreichen der von der Stromreglerausgangsgröße und der Netzblindleistung abhängigen Steuerwinkelgrenzwerte die Kompensationsmittel entsprechend zu- oder abgeschaltet werden. Unmittelbar vor dem Schalten der Kompensationsmittel wird jeweils der entgegengesetzte Steuerwinkel angesteuert.

Drei Ausführungsbeispiele der Anordnung zur Durchführung des Verfahrens nach der Erfindung sind in der Zeichnung dargestellt und nachfolgend näher erläutert.

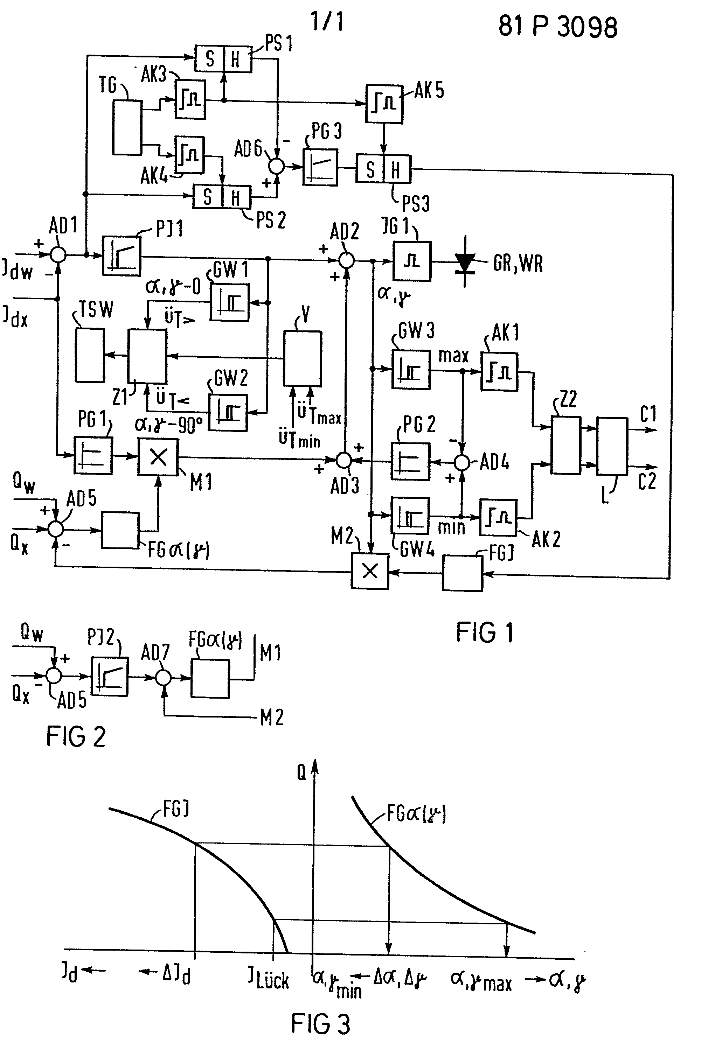

Bis auf den Regelsinn für ein Transformator-Stufenschaltwerk TSW ist die Schaltung nach Fig. 1 für Gleich- und Wechselrichter identisch. Eine Erweiterung dieser Schaltung kann für die Netzblindleistung Q dadurch vorgenommen werden, daß statt einer einfachen Differenzbildung für die Gleichstromregelung eine überlagerte Netzblindleistungsregelung nach Fig. 2 vorgesehen ist.

Die in Funktionsgebern FG $\mathcal{L}$ ($\gamma$) und FGJ einzustellenden Kennlinien zeigt Fig. 3.

Daraus ist erkennbar, daß der Blindleistungszunahme durch die Gleichstromzunahme im Funktionsgeber FGJ durch eine Steuerwinkelabnahme im Funktionsgeber FG $\mathcal{L}$ ($\gamma$) entgegengewirkt werden kann.

Wenn im folgenden von Strom-, Blindleistung- oder dergleichen Größen die Rede ist, so sind darunter jeweils entsprechende Spannungen zu verstehen.

Die von einer Additionsstufe AD1 ausgangsseitig gebildete Differenz aus dem Gleichstromsollwert $J_{dw}$ und dem Gleichstromistwert $J_{dx}$ wird mittels eines Taktgebers TG für astabile Kippstufen AK3 und AK4 taktweise über parallelgeschaltete Probenstufenspeicher PS1 und PS 2 in einer Additionsstufe AD6 auf jeweilige Unterschiede der Stromregelgröße abgefragt und die jeweiligen Unterschiede über ein Proportionalglied PG3 einem über eine astabile Kippstufe AK5 getakteten dritten Probenstufenspeicher PS3 zugeführt, dessen Ausgang mit dem Stromfunktionsgeber FGJ verbunden ist. Das Abfragen der momentanen Inhalte der einzelnen Probenstufenspeicher erfolgt durch die von steigenden Flanken der direkten

- 5 -        VPA 81 P 3 0 9 8 E

bzw. inversen Impulsen des Taktgebers TG angeregten astabilen Kippstufen AK3 bis AK5, von denen die den Probenstufenspeichern PS1 und PS3 zugeordneten Kippstufen AK3 und AK5 von den direkten, die Kippstufe AK4 für den Probenstufenspeicher PS2 von den inversen Impulsen des Taktgebers TG abhängig sind. Der Stromfunktionsgeber FGJ erzeugt gemäß Fig. 3 in Abhängigkeit von der gerade vorhandenen Gleichstromänderung $\Delta J_d$ am Ausgang des Probenstufenspeichers PS3 an seinem Ausgang entsprechend seiner Kennlinie eine blindleistungsabhängige Spannung, die mit einer dem Steuerwinkel $\alpha$ bzw. $\gamma$ entsprechenden Spannung in dem Multiplizierer M2 multipliziert als Produkt in die Additionsstufe AD5 gegeben wird. und dort mit der in der Additionsstufe AD5 gebildeten Differenz aus Soll-(Qw) und Istwert (Qx) der Netzblindleistung Q summiert dem Steuerwinkelfunktionsgeber FG $\alpha$ bzw. FG $\gamma$ zugeführt wird, in dem gemäß dessen Kennlinie nach Fig. 3 eine entsprechende Herabsetzung der Steuerwinkel $\alpha$ bzw. $\gamma$ um den Differenzwert $\Delta\alpha$ bzw. $\Delta\gamma$ vorgenommen wird, der seinerseits mit zunehmender Netzblindleistung Q den Steuerwinkel $\alpha$ bzw. $\gamma$ vom Maximalwert $\alpha$ max, $\gamma$ max zum Minimalwert $\alpha$ min, $\gamma$ min hin verschiebt.

Der Differenzwert $\Delta\alpha$ bzw. $\Delta\gamma$ wird im Multiplizierer M1 mit dem im Proportionalglied PG1 auf entsprechendes Niveau gebrachten Gleichstromistwert $J_{dx}$ (d.h. einer diesem Wert entsprechenden Spannung) multipliziert und das Produkt in der Additionsstufe AD3 mit dem Ausgangswert des Proportionalgliedes PG2 summiert und diese Summe ihrerseits in der Additionsstufe AD2 zu der Ausgangsspannung des Stromreglers PJ1 zu einer dem effektiven Steuerwinkel $\alpha$ bzw. $\gamma$ proportionalen Spannung summiert, die den Impulsgeber JG1 zur Zündung der Ventile der Gleich- bzw. Wechselrichter GR, WR beeinflußt und außerdem zwei Grenzwertstufen GW3 und GW4 betätigt, sobald deren Ansprechgrenzwert ($\alpha_{max}, \gamma_{max}$ bzw. $\alpha_{min}, \gamma_{min}$)

erreicht ist. Die im entgegengesetzten Sinne wirkenden Ausgangsgrößen beider Grenzwertstufen GW3, GW4 sind sowohl mit einer ausgangsseitig das Proportionalglied PG2 beaufschlagenden Additionsstufe AD4 als auch jeweils mit durch steigende Impulsflanken angeregten astabilen Kippstufen AK1 bzw. AK2 verbunden, deren Ausgänge an einen Zähler Z2 geführt sind, der bei Erreichen eines einstellbaren Zählerstandes eine Impulslogik L zum Schalten von Kompensationskondensatoren C1, C2 auslöst, wenn die Impulslogik L vom Ausgangssignal eines Vergleichers V in Bereitschaft gebracht worden ist. Das ist der Fall, wenn der Ausgang eines Zählers Z1 den Ansprechwert $\ddot{u}_{Tmax}$ bzw. $\ddot{u}_{Tmin}$ des Vergleichers erreicht, wozu die Ausgangssignale von Grenzwertstufen GW1 und GW2 den Zähler Z1 entsprechend verstellt haben und dieser ein Transformatorschaltwerk TSW im Sinne einer maximalen bzw. minimalen Übersetzungsverhältnisses $\ddot{u}_{Tmax}$ bzw. $\ddot{u}_{Tmin}$ der nicht dargestellten Transformatoren in den Gleich- bzw. Wechselrichterstationen beeinflußt.

Bei Überschreiten des Grenzwertes der Grenzwertstufe GW1, der einer Verminderung der Steuerwinkel $\alpha$ bzw. $\gamma$ gegen Null entspricht, wird der Zähler Z1 im Sinne einer Verstellung des Transformatorschaltwerkes TSW entsprechend einer Vergrößerung des Transformatorübersetzungsverhältnisses $\ddot{u}_T$ und bei Überschreiten des höheren Grenzwertes der Grenzwertstufe GW2, was einer Vergrößerung des Steuerwinkels $\alpha$ bzw. $\gamma$ gegen 90° entspricht, entsprechend einer Verkleinerung des Transformatorübersetzungsverhältnisses $\ddot{u}_T$ beeinflußt, so daß die Ausgangsgröße des Stromreglers PJ1 innerhalb eines zulässigen Bereiches gehalten wird.

Zur Gradientenregelung der Netzblindleistung Q zwecks deren Verringerung werden die Steuerwinkel $\alpha$ und/oder $\gamma$ zwischen den minimalen und maximalen Grenzwerten $\gamma_{min}$, $\alpha_{min}$ bzw. $\alpha_{max}$, $\gamma_{max}$ so gesteuert, daß innerhalb des

Steuerbereiches der Differentialquotient $\frac{\Delta Q}{\Delta Jd}$ gegen Null geht, d.h. die Netzblindleistung Q konstant gehalten und damit ebenfalls zu Null gemacht werden kann. Der hierzu erforderliche Freiheitsgrad für die Stromregelung wird durch die vorgenannte Maßnahme erhalten.

Bei Erreichen der Endstellungen des Transformatorschaltwerkes TSW mit dem Übersetzungsverhältnis $\ddot{u}_{Tmax}$ bzw. $\ddot{u}_{Tmin}$ wird, wie gesagt, vom Zähler Z; dem Vergleicher V ein Signal entsprechend einem Vergleichsignal für $\ddot{u}_{Tmax}$ bzw. $\ddot{u}_{Tmin}$ zugeführt, so daß der Vergleicher V die Impulslogik L anregt. Mit dem erwähnten Schalten der Kompensationskondensatoren C1, C2 stellen sich im Gleich- bzw. Wechselrichter GR, WR wieder Verhältnisse, die zu einer Änderung des Übersetzungsverhältnisses $\ddot{u}_{Tmin} \leq \ddot{u}_T \leq \ddot{u}_{Tmax}$ führen.

Unmittelbar vor dem Schalten der Kompensationskondensatoren wird der jeweils entgegengesetzte Steuerwinkel (z.B. bei $\alpha_{min}$ der Steuerwinkel $\alpha_{max}$ bzw. bei $\gamma_{min}$ der Steuerwinkel $\gamma_{max}$) angesteuert. Es ergibt sich somit für eine begrenzte Zeitspanne eine erhöhte Netzblindleistung. Z.B. wird beim Zuschalten von Kompensationskondensatoren auf der WR-Seite dadurch der Steuerwinkel $\gamma_{min}$ gegen $\gamma_{max}$ verstellt, um den durch zugeschaltete Kompensationskondensatoren eintretenden Blindlastsprung zu kompensieren.

Bei gleicher schaltbarer kapazitiver Grundschwingungsleistung kann die Änderung der Steuerwinkel so eingestellt werden, daß die Summenleistung nach dem Schalten der Kompensationskondensatoren wieder ihre vorherigen Ausgangswerte einnimmt.

Beim Wechselrichter WR wird zusätzlich die Sicherheit gegen "Kippen" erhöht, die ansonsten beim Zuschalten der Kompensationskondensatoren und bei kleinen Steuerwinkeln $\gamma$ geringer ist.

Um diese vorgenannten Effekte zu erreichen, wird zur Bildung der Steuerwinkel $\alpha$, $\gamma$ am Ausgang einer Additionsstufe AD2, wie schon dargelegt, dieser Additionsstufe AD2 außer dem positiven Ausgang des Stromreglers PJ1 noch der positive Ausgangswert der dritten Additionsstufe AD3 zugeführt, der die Steuerwinkel entsprechend der Netzblindleistung ändert.

Statt der in Fig. 1 dargestellten einfachen Differenzbildung für die Netzblindleistung Q durch das Proportionalglied PG1 kann gemäß Fig. 2 eine der Gleichstromregelung durch den Stromregler PJ1 überlagerte Regelung der Netzblindleistung durch einen der Additionsstufe AD5 nachgeordneten Blindleistungs-Regler PJ2 mit nachgeordneter Additionsstufe AD7 vorgenommen werden, die ausgangsseitig den Funktionsgeber FG$\alpha$ bzw. FG$\gamma$ steuert und eingangsseitig wiederum vom Multiplizierer M2 abhängig ist. Dabei sind die gleichermaßen einzuhaltenden Grenzen für die Gleich- und Wechselrichterstationen GR bzw. WR getrennt vorgebbar.

Das bereits geschilderte Zusammenwirken der beiden Funktionsgeber FG und FG$\alpha(\gamma)$ nach Fig. 3 hat bei einer Zunahme des Gleichstromes $J_d$ unmittelbar eine Abnahme der Steuerwinkel $\alpha$, $\gamma$ zur Folge, wodurch die stromabhängige Zunahme der Blindleistung durch die steuerwinkelabhängige Abnahme der Blindleistung aufgehoben wird.

3 Figuren
7 Patentansprüche

Patentansprüche

1. Verfahren zur Regelung der Netzblindleistung auf ein Minimum durch Beeinflussung von Steuerwinkeln und Kompensationsmitteln bei einer Hochspannungs-Gleichstrom-Übertragung, d a d u r c h   g e k e n n z e i c h n e t, daß die die Netzblindleistung beeinflussenden Steuerwinkel, das Transformatorübersetzungsverhältnis von Stromrichtertransformatoren und die Kompensationsmittel in Abhängigkeit vom Einhalten eines gegen Null gehenden Differentialquotienten aus Blindleistung und Gleichstrom so verändert werden, daß die Netzblindleistung über den ganzen Betriebsbereich der Hochspannungs-Gleichstrom-Übertragung stationär auf Null geregelt wird, wobei Abweichungen vom Sollwert der Netzblindleistung bei Änderung der Steuerwinkel nur während der Schaltvorgänge der Kompensationsmittel und nur innerhalb transienter Zeiten von mit erhöhter Blindleistungsabgabe am Netz betriebenen elektrischen Maschinen auftreten.

2. Verfahren nach Anspruch 1, d a d u r c h   g e - k e n n z e i c h n e t , daß die Steuerwinkel im Betrieb innerhalb bestimmter minimaler und maximaler Grenzwerte eingestellt und bei Erreichen eines der Grenzwerte entsprechende Kompensationsmittel geschaltet werden und daß unmittelbar vorher jeweils der entgegengesetzte Grenzwert des betreffenden Steuerwinkels angesteuert wird.

3. Verfahren nach Anspruch 1 oder 2, d a d u r c h   g e - k e n n z e i c h n e t , daß die Sollwerte für die Blindleistung getrennt für Wechsel- und Gleichrichterstationen vorgegeben werden.

4. Verfahren nach Anspruch 1, 2 oder 3, d a d u r c h   g e k e n n z e i c h n e t , daß geregelte Gleichstromwerte gespeichert und zur Veränderung der Übersetzungs-

verhältnisse der Stromrichtertransformatoren sowie zum
Ausgleich der über bestimmte Zeiträume auftretenden
Netzspannungsänderungen benützt werden.

5. Anordnung zur Durchführung der Verfahren nach mindestens einem der vorhergehenden Ansprüche, d a d u r c h   g e k e n n z e i c h n e t , daß die Differenz aus Soll- und Istwert des Gleichstromes als Stromregelgröße einem Stromregler (PJ1) und einer getakteten Abfrageanordnung für Unterschiede der Stromregelgrößen (TG, PS1 - PS3, AK3 - AK5, AD6) zugeführt und der Ausgang der Abfrageanordnung über einen Stromfunktionsgeber (FGJ) mit dem einen Eingang eines Multiplizierers (MZ) verbunden ist, dessen anderem Eingang die am Ausgang eines die Wechsel- bzw. Gleichrichter (WR, GR) steuernde Additionsstufe (AD2) auftretenden Steuerwinkel ($\measuredangle, \gamma$) zugeführt sind und dessen Ausgang mit einer vom Soll- und Istwert der Netzblindleistung beaufschlagten Additionsstufe (AD5) verbunden ist, deren Ausgang über einen Steuerwinkelfunktionsgeber (FG$\measuredangle(\gamma)$) mit einem eingangsseitig außerdem vom Gleichstromistwert ($J_{dx}$) abhängigen Multiplizierer (M1) verbunden ist, dessen Ausgang auf den einen Eingang einer Additionsstufe (AD3) geführt, deren zweiter Eingang mit dem Ausgang einer von den Steuerwinkeln ($\measuredangle, \gamma$) abhängigen Korrekturanordnung (GW3, GW4, AK1, AK2, Z2, AD4, PG2) zur Betätigung von Kompensationskondensatoren (C1, C2) verbunden ist und der Ausgang der Additionsstufe (AD3) mit dem einen Eingang der Additionsstufe (AD2) und deren zweiter Eingang mit dem Ausgang des Stromreglers (PJ1) verbunden ist, dessen Ausgangsgröße außerdem über Grenzwertstufen (GW1, GW2) für das Transformatorübersetzungsverhältnis ($ü_T$) ein Transformatorschaltwerk (TSW) steuert und über einen Vergleicher (V) für die Grenzwerte das Transformatorübersetzungsverhältnis ($ü_T$) eine von der Korrekturanordnung abhängige Impulslogik (L) steuert.

6. Anordnung nach Anspruch 5, d a d u r c h  g e -
k e n n z e i c h n e t , daß die Leistungsregelgröße
über einen Leistungsregler (PJ2) auf den einen Eingang
einer vom Ausgang des Multiplizierers (M2) beaufschlagten Additionsstufe (AD7) gegeben ist und der Ausgang
der Additionsstufe (AD7) über den Steuerwinkelfunktionsgeber (FG$\mathcal{L}(\vartheta)$) mit dem einen Eingang des Multiplizierers (M1) verbunden ist.

7. Anordnung nach Anspruch 5 oder 6, d a d u r c h  g e -
k e n n z e i c h n e t , daß die Grenzwertstufen (GW1,
GW2) mit einem Zähler (Z1) zur Beeinflussung des Transformatorschaltwerkes (TSW) sowie des Vergleichers (V)
verbunden sind und die Korrekturanordnung über einen
zweiten Zähler (Z2) mit der Impulslogik (L) verbunden
ist.

FIG 1

FIG 2

FIG 3